Europäisches Patentamt

European Patent Office

Office européen des brevets

(19)

(11) **EP 0 951 376 B1**

## (12) FASCICULE DE BREVET EUROPEEN

(45) Date de publication et mention
de la délivrance du brevet:
**22.05.2002 Bulletin 2002/21**

(21) Numéro de dépôt: **97947080.4**

(22) Date de dépôt: **18.11.1997**

(51) Int Cl.⁷: $B23K\ 9/09$

(86) Numéro de dépôt international:
**PCT/FR97/02070**

(87) Numéro de publication internationale:
**WO 98/22247 (28.05.1998 Gazette 1998/21)**

(54) **PROCEDE ET DISPOSITIF DE SOUDAGE A L'ARC EN COURANT PULSE**

VERFAHREN UND VORRICHTUNG ZUM SCHWEISSEN MIT EINER GEPULSTEN
LASERSTRAHLUNG

METHOD AND DEVICE FOR PULSED ARC WELDING

(84) Etats contractants désignés:
**AT CH DE DK ES FI FR GB IT LI NL PT SE**

(30) Priorité: **22.11.1996 FR 9614315**

(43) Date de publication de la demande:
**27.10.1999 Bulletin 1999/43**

(73) Titulaire: **LA SOUDURE AUTOGENE FRANCAISE
F-75007 Paris (FR)**

(72) Inventeurs:
 • **PLOTTIER, Gérard
 F-93380 Pierrefitte (FR)**
 • **BRIAND, Francis
 F-75010 Paris (FR)**

(74) Mandataire: **Le Moenner, Gabriel
L'AIR LIQUIDE, Société Anonyme
pour l'étude et l'exploitation des procédés
Georges Claude
75, Quai d'Orsay
75321 Paris Cédex 07 (FR)**

(56) Documents cités:
 **BE-A- 817 637          GB-A- 2 268 009
 US-A- 4 459 460          US-A- 5 017 757**

 • **PATENT ABSTRACTS OF JAPAN vol. 6, no. 220
 (M-169) [1098] , 5 novembre 1982 & JP 57 124572
 A (HITACHI SEISAKUSHO K.K.), 3 août 1982,**
 • **PATENT ABSTRACTS OF JAPAN vol. 8, no. 189
 (M-321) [1626] , 30 août 1984 & JP 59 078776 A
 (HITACHI SEIKO K.K.), 7 mai 1984,**

## Description

La présente invention concerne les procédés de soudage à l'arc en courant pulsé, et plus particulièrement les procédés de soudage à l'arc en courant pulsé sous flux gazeux avec fil fusible.

De façon générale, les procédés de soudage à l'arc sous flux gazeux avec fil fusible consistent à faire jaillir un arc électrique entre les tôles à souder et un fil de soudage fusible. Le fil fusible animé d'un mouvement de translation est progressivement fondu par l'arc et contribue ainsi à la formation d'un cordon de soudure.

Le fait de pouvoir avancer le fil à différentes vitesses induit l'existence de plusieurs régimes de fonctionnement dont les caractéristiques de soudage sont complètement différentes. Selon la valeur du courant et de la tension, la manière dont le métal en fusion est transféré du fil vers le bain liquide varie notablement.

A basses intensités (80 à 150 A), l'effet Joule et la chaleur dégagée par l'arc fondent l'extrémité du fil en formant une goutte de métal fondu. Le fil continuant à avancer, la goutte vient en contact avec le bain de soudage. Il se produit alors un court-circuit (extinction de l'arc), et c'est à ce moment que la goutte est détachée, puis transférée dans le bain. Quand le transfert est effectué, l'arc se réamorce et le processus peut ainsi recommencer. Ceci constitue le régime par transfert par court-circuit (short arc).

A plus fortes intensités (150 à 250 A), on se situe dans le régime globulaire. Ce régime de transfert est assez peu utilisé en pratique car il conduit à un transfert de matière erratique et à d'importantes projections. Dans ce régime, la goutte peut croître démesurément et soit exploser avant tout contact avec la tôle, soit être transférée par court-circuit dans de mauvaises conditions, souvent à l'extérieur du bain.

A très fortes intensités et vers 30 à 35 V suivant le gaz de protection utilisé, on entre dans le régime de pulvérisation axiale (spray-arc), dans lequel un chapelet de petites gouttes de métal fondu s'échappent régulièrement de l'extrémité du fil en fusion.

Le courant est dans ce cas assez important pour expulser les gouttes formées avant tout contact avec la tôle.

Il existe un quatrième régime de transfert, plus artificiel, qui, du point de vue de l'énergie moyenne de soudage, se situe dans le domaine du globulaire : c'est le régime pulsé. Dans ce cas, on soude en courant pulsé, en choisissant les paramètres de pulsation de telle sorte qu'il y ait pour chacune des impulsions un transfert de type spray-arc avec une seule goutte par impulsion. Cela nécessite des générateurs spéciaux où l'on contrôle la forme du courant. Ce régime est souvent utilisé car il permet d'avoir un bon transfert dans une plage d'énergie moyenne où le soudage classique en courant continu est difficilement praticable. Ce régime est cependant très bruyant, et il n'est pas rare d'obtenir des niveaux de bruit acoustique proches de 100 dBA (à 40 cm de l'arc), qui dépassent assez largement les seuils définis dans la législation réglementant le bruit émis par les machines. En régime pulsé, l'impulsion peut revêtir différentes formes : la forme trapézoïdale est pratiquement la plus utilisée, mais il est possible, grâce aux générateurs de courant à transistors, de donner à l'impulsion des formes variées tout en contrôlant assez bien les paramètres qui la définissent.

L'élaboration d'un programme de soudage en courant pulsé consiste à trouver la meilleure adéquation entre les valeurs des paramètres de la pulsation et le résultat recherché de soudage. C'est-à-dire que pour chaque fil, gaz de protection et vitesse d'avance de fil, on doit déterminer les valeurs de ces paramètres qui satisfont au mieux les critères selon lesquels est jugée l'opération de soudage. En général, un bon programme de soudage en courant pulsé doit comporter un seul détachement de goutte par pulse, avec des diamètres de gouttes de l'ordre du diamètre du fil. Ceci impose donc, pour une vitesse d'avance de fil donnée, une fréquence de pulsations. D'autre part, la croyance commune est qu'il convient d'avoir des pentes de montée et de descente du courant aussi importantes que possible afin d'obtenir des arcs rigides et très directifs qui, selon la plupart des opérateurs, sont la meilleure façon de réaliser un cordon de soudure en régime pulsé. Les autres paramètres sont généralement choisis de façon empirique.

Ainsi, le document JP-A-57124572 décrit un procédé de soudage à l'arc pulsé utilisant une électrode consommable avec mise en oeuvre d'une protection gazeuse constituée d'un gaz inerte. Selon ce document, l'amplitude du courant doit être d'au moins 300A, la durée s'étendant entre le début de l'augmentation du courant et le début de sa chute, c'est-à-dire incluant le temps haut pendant lequel le courant est à sa valeur maximale, est comprise entre 0,2 ms et 4 ms, et ce, pour des impulsions de forme triangulaire ou rectangulaire.

Le document US-A-4,459,460 décrit un circuit de soudage par court-circuit permettant de générer des impulsions de courant allant jusqu'à 10 000 ampères dans lequel l'envoi des impulsions se fait en corrélation avec la tension à la charge.

Par ailleurs, le document US-A-5,017,757 porte sur un procédé de soudage à l'arc pulsé dans lequel l'alimentation en fil fusible est réalisée à vitesse constante, laquelle est progressivement fondue en régime spray, lors des périodes d'impulsions ou de pics de courant. La machine de soudage décrite permet de contrôler les temps de montée et de descente des impulsions. Toutefois, les valeurs de pente de courant à observer durant les périodes de montée et de descente ne sont pas précisées.

Toutefois, le problème des nuisances sonores engendrées lors d'une opération de soudage à l'arc en régime pulsé n'a jusqu'alors pas été résolu.

L'invention a donc pour but de fournir un procédé de soudage à l'arc en régime pulsé présentant un niveau de bruit acoustique acceptable (inférieur à 90dbA environ) et de bonnes caractéristiques de soudage.

A cet effet, l'invention a pour objet un procédé de soudage à l'arc en courant pulsé avec fil fusible et transfert de type arc-spray avec une seule goutte de métal fondue transféré du fil vers le cordon de soudure, à chaque impulsion de courant, caractérisé en ce que chaque impulsion de courant électrique présente des pentes de montée et/ou de descente comprises entre 50 A/ms et 1000 A/ms, à l'exception d'une impulsion de forme triangulaire.

De préférence, chaque impulsion de courant présente un temps haut de durée non nulle.

Dans le cadre de la présente invention, on entend par impulsion à temps haut de durée non nulle, une impulsion dont la représentation, la visualisation ou la mesure montre qu'il existe une durée non nulle séparant, la fin de la montée du courant et le début de la descente dudit courant. Pendant cette durée non nulle du temps haut, l'intensité du courant peut, selon le cas, être maintenue sensiblement constante ou, au contraire, subir de légères variations, ainsi que détaillée ci-après.

Selon le cas, le procédé peut comporter l'une ou plusieurs des caractéristiques suivantes :

- les pentes de montée et/ou de descente sont comprises entre 100 A/ms et 600 A/ms, de préférence entre 150A/ms et 500A/ms ;
- ledit procédé de soudage à l'arc est un procédé MAG;
- la fréquence des pulsations est réglée de manière à obtenir des gouttes de métal fondu dont le diamètre, au moment de leur libération, est compris entre 1 et 1,4 fois le diamètre dudit fil fusible ;
- la fréquence des pulsations est réglée de manière à obtenir des gouttes de métal fondu dont le diamètre, au moment de leur libération, est environ 1,2 fois le diamètre dudit fil fusible ;
- les impulsions sont trapézoïdales;
- les impulsions sont composées d'une combinaison de plusieurs motifs identiques, similaires ou différents choisis parmi les motifs trapézoïdaux, sinusoïdaux, triangulaires, rectangulaires ou carrés.
- on opère sous un flux gazeux de protection comprenant un gaz actif.
- le gaz actif de protection comprend de l'argon et/ou de l'hélium, et au moins un composé choisi parmi $CO_2$, l'hydrogène, l'oxygène et leurs mélanges.

L'invention sera mieux comprise à la lecture de la description qui va suivre, donnée uniquement à titre d'exemple, et faite en se référant aux dessins sur lesquels:

- la figure 1 est une vue schématique d'une installation de soudage à l'arc avec fil fusible sous flux gazeux;
- la figure 2 est une vue schématique, avec arrachement, d'un soudage de tôles réalisé avec une telle installation;
- la figure 3 est un graphe représentant une impulsion électrique trapézoïdale qui possède les caractéristiques de l'invention;
- la figure 4 schématise la décomposition d'une impulsion de forme quelconque;
- les figures 5 et 6 sont des graphes représentant des impulsions, respectivement, sinusoïdale selon l'invention et triangulaire hors du cadre de la présente invention;
- la figure 7 représente une forme d'impulsion trapézoïdale selon l'invention; et
- les figures 8 à 10 représentent une forme trapézoïdale déformée.

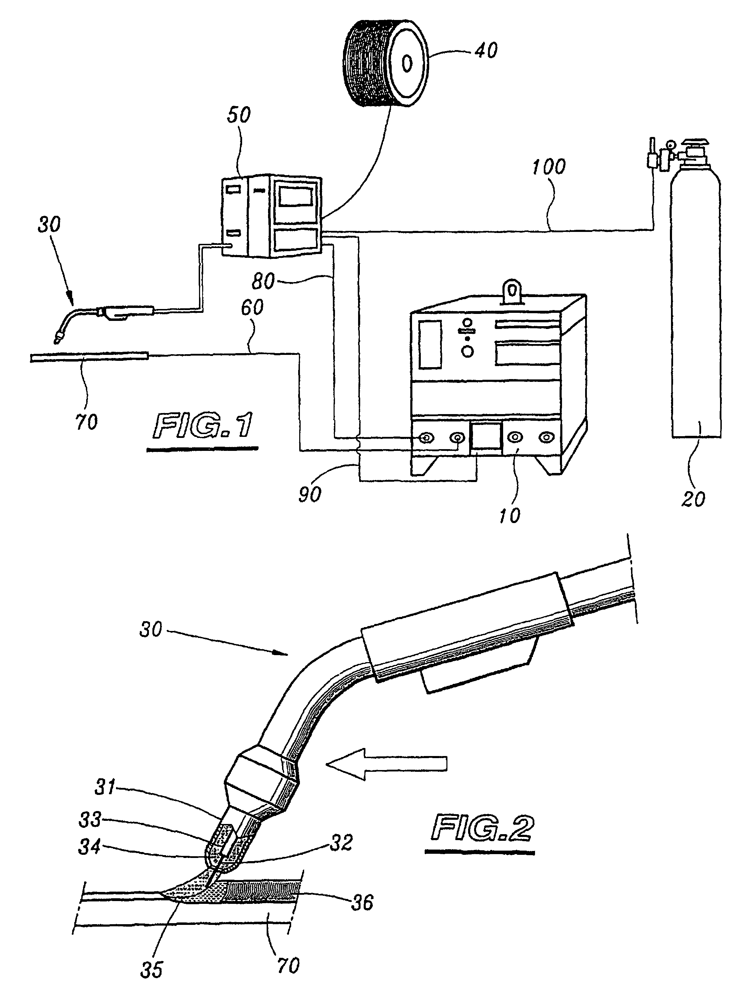

L'installation de soudage à l'arc de la figure 1 comprend essentiellement un générateur de courant électrique 10 à transistors, une source de gaz 20, une torche de soudage 30, une bobine d'alimentation en fil fusible 40, et une unité d'entraînement du fil fusible 50. Le générateur 10 est relié par un premier câble 60 aux tôles à souder 70, et par un deuxième câble 80 à l'unité d'entraînement du fil fusible 50 afin d'imposer le signal électrique souhaité entre le fil fusible et les tôles à souder. Une conduite 100 permet d'alimenter la torche en gaz via l'unité d'entraînement 50. Un câble de contrôle 90 relie par ailleurs le générateur 10 à l'unité d'entraînement 50 du fil fusible, afin d'adapter l'intensité du courant à la vitesse d'avance du fil.

La figure 2 représente schématiquement l'opération de soudage de tôles au moyen de la torche 30. On distingue dans la buse d'extrémité 31 de la torche la partie terminale du fil fusible 32, un tube de contact 33 qui guide ce fil et lui amène le courant électrique, une colonne de gaz 34 jaillissant de la torche vers les tôles à souder 70, et le bain de soudure 35 qui provient de la fusion des tôles et de l'électrode fusible et qui forme, après refroidissement, un cordon de soudure 36.

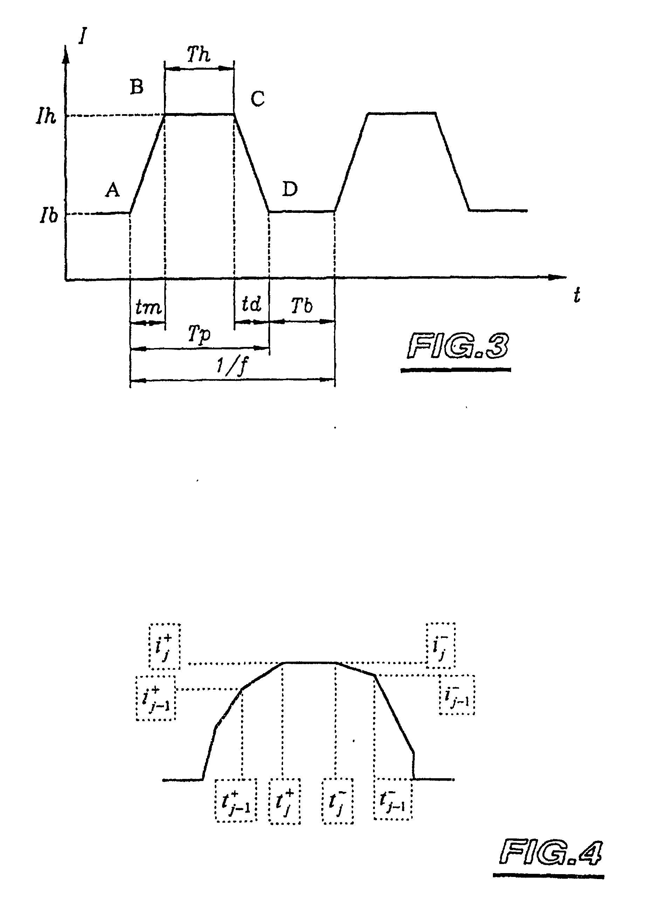

La figure 3 représente un graphe d'une impulsion électrique trapézoïdale qui est la forme de courant pulsé la plus utilisée en soudage à l'arc en courant pulsé. Sur ce graphe, le temps $\underline{t}$ est porté en abscisses et l'intensité I en ordonnées. Les grandeurs définissant le signal représenté sur la figure 3 sont la période1/f, le courant haut Ih, le courant bas Ib, le temps de montée tm, le temps de descente td, le temps haut Th (segment BC), le temps d'impulsion Tp et le temps bas Tb. Ici, les pentes de montée (segment AB) et de descente (segment CD) de l'impulsion sont respectivement sensiblement constantes sur tm et sur td, et sont définies respectivement par (Ih -Ib)/tm et (Ih - Ib)/td.

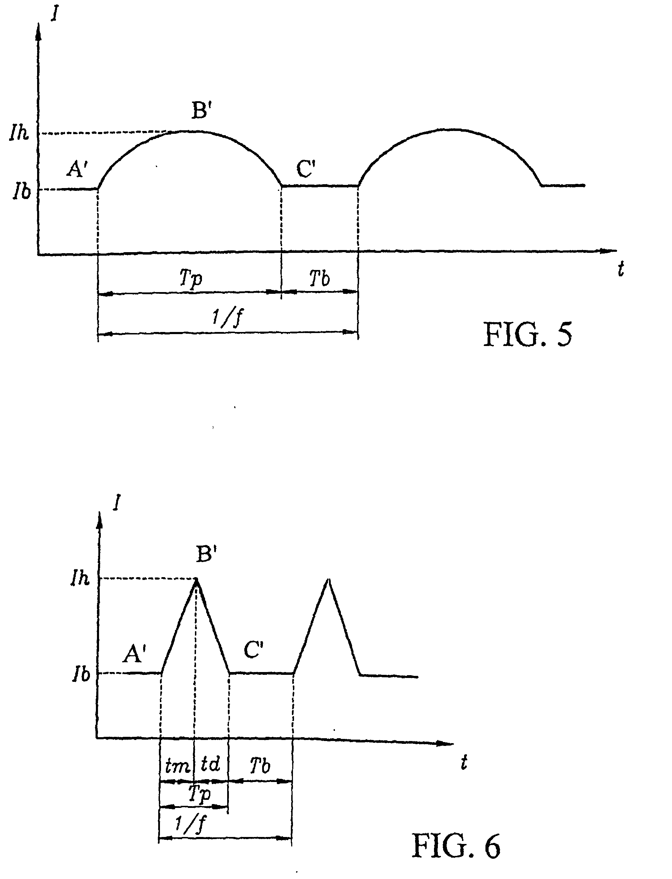

De manière générale et ainsi que schématisé sur la figure 4, une onde de courant pulsé est une succession périodique de 4 éléments: un niveau de courant bas, une montée continue et non monotone de courant depuis le niveau de courant bas jusqu'au niveau de courant haut, un niveau de courant haut, et une descente continue et non monotone d'un niveau de -courant haut vers un niveau de courant bas. Quelque soit la forme de cette onde, chacun de ces éléments peut être décomposé en une suite de segments de courant de longueur $\Delta i_j$ et de durée $\Delta t_j$, ainsi que représenté sur la figure 4.

La montée de courant est donc définie par une succession de segments de courant en nombre n dont la pente est positive. De même, la descente de courant est définie par une succession de segments de courant en nombre k dont la pente est négative.

La montée de courant débute quand la valeur de la pente d'un nombre significatif de segments de courant consécutifs s'éloigne de O dans le sens positif. La montée de courant s'arrête quand la valeur de la pente d'un nombre significatif de segments de courant est proche de O (niveau de courant haut).

La descente de courant débute quand la valeur de la pente d'un nombre significatif de segments de courant s'éloigne de o dans le sens négatif. Elle se termine quand la valeur de la pente d'un nombre significatif de segments de courant s'approche de O (niveau de courant bas).

Les valeurs totales de la pente de montée et de descente sont donc définies comme suit.

$$\Delta i^+_j = i^+_j - i^+_{j-1}$$

$$\Delta t^+_j = t^+_j - t^+_{j-1}$$

$$P^+_j = \Delta i^+_j / \Delta t^+_j$$

La pente de montée (Pm) est donc donnée par la formule:

$$Pm = \frac{1}{n} \sum_{j}^{n} P^+_j$$

De même:

$$\Delta i^-_j = i^-_j - i^-_{j-1}$$

$$\Delta t^-_j = t^-_{j-1} - t^-_j$$

$$P^-_j = \Delta i^-_j / \Delta t^-_j$$

La pente de descente (Pd) est donc donnée par la formule:

$$Pd = \frac{1}{k} \sum_{j}^{k} P_j^-$$

De là, il est toujours possible, à partir d'un signal de forme quelconque (non triangulaire), de préférence avec temps haut de durée non-nulle, de déterminer les pentes de montée et/ou de descente de ce signal.

La figure 5 représente une onde de forme sinusoïdale susceptible d'être décomposée ainsi que susdécrit et représenté sur la figure 4, afin d'en déterminer les pentes de montée et/ou de descente du courant.

La figure 6 donnée à titre comparatif, représente une impulsion électrique de forme triangulaire non conforme à l'invention. En d'autres termes, le temps haut (Th) des impulsions de la figure 6 est nul.

Les grandeurs définissant les signaux des figures 5 et 6 sont identiques à celles de la figure 3.

La Demanderesse a évalué l'influence sur le niveau de bruit des pentes de montée et/ou de descente et de la fréquence de pulsation. On a ainsi déterminé les gammes de valeurs dans lesquelles ces grandeurs permettent d'obtenir une importante réduction de bruit tout en conservant une bonne réalisation des cordons de soudure. La consigne de courant résultante a pu être imposée par un générateur à transistors classiquement utilisé dans le soudage à l'arc en régime pulsé.

La Demanderesse a constaté, de manière surprenante, que, pour des impulsions de forme non-triangulaire et pour une vitesse d'avance de fil donnée, l'utilisation de pentes de descente et de montée faibles comprises entre 50 A/ms et 1000 A/ms et plus particulièrement entre 100 A/ms et 500 A/ms, ainsi que l'utilisation de fréquences de pulsation faibles, c'est-à-dire correspondant à des gouttes dont le diamètre se situe au moment de leur libération entre 1 et 1,4 fois, et plus particulièrement à 1,2 fois environ le diamètre du fil, conduisent à une diminution considérable des niveaux de bruit générés tout en maintenant une bonne soudabilité opératoire.

Les résultats expérimentaux sont réunis dans les tableaux ci-dessous dans lesquels Pm et Pd désignent respectivement la pente de montée et la pente de descente qui sont respectivement sensiblement constantes sur les temps tm et td pour chaque essai présenté.

Tableau 1

| Vitesse d'avance fil (m/mn) | 2 | 4 | 6 |
|---|---|---|---|
| $I_H$ (A) | 360 | 390 | 390 |
| $I_B$ (A) | 30 | 30 | 110 |
| $t_m$ (ms) | 0,5 | 0,6 | 0,6 |

Tableau 1   (suite)

| Vitesse d'avance fil (m/mn) | 2 | 4 | 6 |
|---|---|---|---|
| $t_d$ (ms) | 0,9 | 0,8 | 0,6 |
| $P_m$ (A/ms) | 660 | 600 | 467 |
| $P_d$ (A/ms) | 367 | 450 | 467 |
| Th (ms) | 1,6 | 1,5 | 1,5 |
| Tb (ms) | 14 | 5 | 3,1 |
| f (Hz) | 57 | 127 | 171 |
| bruit (dBA) | 86,5 | 89,5 | 90 |

Le Tableau 1 présente pour différentes vitesses d'avance de fil, avec un fil d'acier de 1,2 mm de diamètre et sous un mélange gazeux classiquement utilisé en soudage MAG (Métal Active Gaz) pulsé (Ar + 3 % $CO_2$ + 1% $O_2$), les valeurs typiques des paramètres d'une impulsion trapézoïdale suivant l'invention (voir Fig. 3). Les niveaux sonores indiqués ont été mesurés à 40 cm de l'arc.

Tableau 2

| Vitesse d'avance fil (m/mn) | 2 | 4 | 6 |
|---|---|---|---|
| $I_H$ (A) | 330 | 330 | 330 |
| $I_B$ (A) | 50 | 110 | 170 |
| $t_m$ (ms) | 1,5 | 1,5 | 1,5 |
| td (ms) | 1,5 | 1,5 | 1,5 |
| $P_m$ (A/ms) | 187 | 147 | 107 |
| $P_d$ (A/ms) | 187 | 147 | 107 |
| $T_h$ (ms) | 2 | 2 | 2 |
| Tb (ms) | 23 | 12,8 | 6,1 |
| f (Hz) | 35,7 | 56 | 90 |
| bruit (dBA) | 81 | 83 | 81 |

Le Tableau 2 présente, dans les mêmes conditions, les valeurs prises par les mêmes paramètres avec des pentes de montée et de descente et des fréquences de pulsation réduites.
On constate très nettement la réduction de bruit apportée par l'utilisation de pentes et de fréquences de pulsation plus faibles selon l'invention : entre 5 dBA et 9 dBA de gain pour cette gamme de vitesses d'avance du fil. La soudabilité opératoire est toujours bonne, bien que les arcs soient moins rigides que dans le cas du Tableau 1 (arcs "épanouis").
En d'autres termes, en comparant les résultats consignés dans les tableaux 1 et 2 précédents, on voit qu'une diminution des valeurs de pentes entraîne une réduction encore plus notable du bruit acoustique.

Tableau 3

| Vitesse d'avance fil (m/mn) | 1,3 | 3 |
|---|---|---|
| $I_H$ (A) | 340 | 360 |
| $I_B$ (A) | 30 | 30 |
| $t_m$ (ms) | 0,6 | 0,6 |
| $t_d$ (ms) | 0,8 | 0,8 |
| $P_m$ (A/ms) | 517 | 550 |
| $P_d$ (A/ms) | 388 | 413 |
| $T_h$ (ms) | 1,3 | 1,3 |
| $T_b$ (ms) | 23,8 | 10,2 |
| f (Hz) | 38 | 77 |
| bruit (dBA) | 85 | 87,5 |

Tableau 4

| Vitesse d'avance fil(m/mn) | 1,3 | 3 |
|---|---|---|
| $I_H$ (A) | 340 | 360 |
| $I_B$ (A) | 30 | 60 |
| $t_m$ (ms) | 1,5 | 1,5 |
| $t_d$ (ms) | 1,5 | 1,5 |
| $P_m$ (A/ms) | 207 | 200 |
| $P_d$ (A/ms) | 207 | 200 |
| $T_h$ (ms) | 1,4 | 2 |
| Tb (ms) | 36,7 | 20,4 |
| f (HZ) | 24 | 39 |
| bruit (dBA) | 83,3 | 84,5 |

Les Tableaux 3 et 4 indiquent les résultats d'un programme de soudage, réalisé cette fois sur un fil d'acier inoxydable de 1,2 mm de diamètre et sous un mélange gazeux classiquement utilisé en soudage MAG pulsé (Ar + 3% $CO_2$ + 1% $H_2$). Le Tableau 3 correspond à un premier signal trapézoïdal suivant l'invention (voir fig. 3), et le Tableau 4 correspond à un signal trapézoïdal dont les pentes de montée et de descente et la fréquence de pulsation sont réduites, on constate qu'il y a, là aussi, réduction de bruit quand on utilise des pentes de montée et de descente plus douces et des fréquences plus faibles.
Le procédé suivant l'invention peut être appliqué à tout type de soudage à l'arc en courant pulsé, avec fil fusible, et en utilisant des impulsions notamment trapézoïdales ou de formes composées variées, telles des combinaisons de motifs trapézoïdaux, triangulaires, sinusoïdaux, rectangulaires ou carrés.
Ainsi que susmentionné, la forme trapézoïdale est la forme d'impulsion la plus utilisée en soudage à l'arc en courant pulsé. Néanmoins, de par les régulations de courant inhérentes à la technologie du poste de soudage utilisé, une forme de courant donnée, en particulier la forme trapézoïdale, peut être sensiblement modifiée et/ou déformée, c'est-à-dire que la régulation de courant du poste de soudage peut ne pas suivre exactement la consigne de courant qui lui est imposée.

Toutefois, en pareil cas, il est possible de reconstituer la forme du courant de consigne à partir de la forme "déformée", c'est-à-dire la forme observée par la mesure du courant. Pour ce faire, on détermine d'abord la forme du courant au moyen d'un oscilloscope associé à un capteur de mesure du courant dont la bande passante est d'au moins 10 kHz.

Habituellement, on place le capteur de mesure dans le circuit de soudage, au niveau du faisceau de torche par exemple, et la mesure se fait pendant l'opération de soudage; on veillera néanmoins à ce que le fonctionnement du générateur soit, pendant la mesure, non-interdit par le constructeur dans la notice d'utilisation dudit générateur.

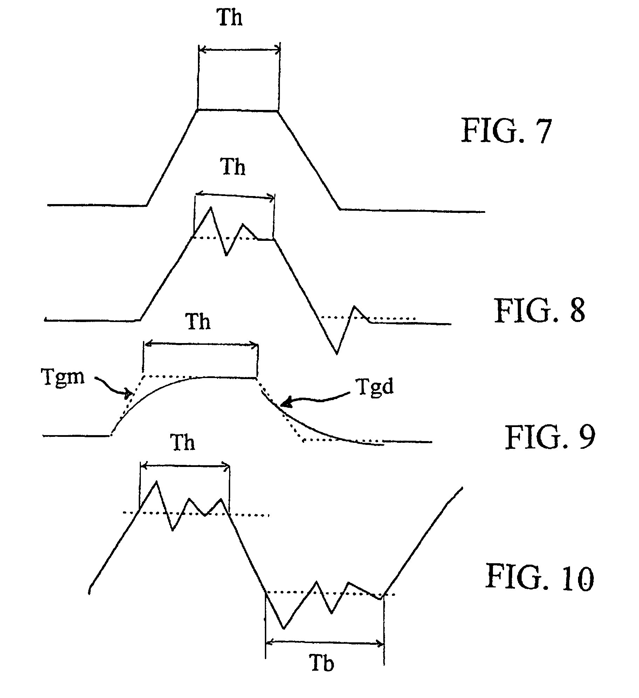

Ensuite, à partir de la forme mesurée de l'impulsion (forme dite "déformée"), on reconstitue la forme de consigne, ainsi que schématisé sur les figures 7 à 10 annexées.

Plus précisément, la figure 7 représente le schéma d'une impulsion trapézoïdale (forme de consigne) et les figures 8 à 10 schématisent certaines déformations susceptibles d'affecter la forme de consigne trapézoïdale, telles qu'elles apparaissent sur l'écran de l'oscilloscope.

En particulier, les figures 8 et 10 schématisent notamment le phénomène connu en électronique de puissance sous le nom de "overshooting" qui correspond à un ou des dépassements ou excès par rapport à la consigne de courant, dus au temps de réponse du générateur.

Ce phénomène engendre un aspect dentelé, c'est-à-dire irrégulier, du temps haut (Th) et/ou du temps bas (Tb) du courant.

En présence d'une impulsion "déformée", telles celles des figures 8 et 10, on retrouve l'impulsion trapézoïdale de consigne de la figure 7 en calculant la valeur moyenne du courant

En présence d'une impulsion "déformée", telle celle de la figure 9, on retrouve l'impulsion trapézoïdale de consigne en calculant la valeur moyenne du courant à partir du tracé du plateau de temps haut (Th) et des tangentes au début de la montée (Tgm) et au début de la descente (Tgd) du courant.

On constate, en outre, que les programmes établis avec des fréquences de pulsation faibles et des pentes douces conduisent, en général, à des intensités moyennes de courant plus élevées et donc à des bains de soudure plus chauds. Ceci est un avantage, notamment pour le soudage à plat des aciers inoxydables, qui, en présence d'un gaz peu oxydant, sont relativement difficiles à mouiller.

## Revendications

1. Procédé de soudage à l'arc en courant pulsé avec fil fusible et transfert de type arc-spray avec une seule goutte de métal fondue transféré du fil vers le cordon de soudure, à chaque impulsion de courant, **caractérisé en ce que** chaque impulsion de courant électrique présente des pentes .de montée et/ou de descente comprises entre 50 A/ms et 1000 A/ms, l'impulsion n'étant pas de forme triangulaire.

2. Procédé de soudage à l'arc selon la revendication 1, **caractérisé en ce que** chaque impulsion présente un temps haut de durée non nulle.

3. Procédé de soudage à l'arc selon l'une des revendications 1 ou 2, **caractérisé en ce que** lesdites pentes de montée et/ou de descente sont comprises entre 100 A/ms et 600 A/ms.

4. Procédé de soudage à l'arc selon l'une des revendications 1 à 3, **caractérisé en ce que** ledit procédé de soudage à l'arc est un procédé MAG.

5. Procédé de soudage à l'arc selon la revendication 4, **caractérisé en ce que** la fréquence des pulsations est réglée de manière à obtenir des gouttes de métal fondu dont le diamètre, au moment de leur libération, est compris entre 1 et 1,4 fois le diamètre dudit fil fusible.

6. Procédé de soudage à l'arc selon la revendication 5, **caractérisé en ce que** la fréquence des pulsations est réglée de manière à obtenir des gouttes de métal fondu dont le diamètre, au moment de leur libération, est environ 1,2 fois le diamètre dudit fil fusible.

7. Procédé de soudage selon l'une des revendications 1 à 6, **caractérisé en ce que** les impulsions sont trapézoïdales.

8. Procédé de soudage selon l'une des revendications 1 à 6, **caractérisé en ce que** les impulsions sont composées d'une combinaison de plusieurs motifs identiques, similaires ou différents choisis parmi les motifs trapézoïdaux, sinusoïdaux, triangulaires, rectangulaires ou carrés.

9. Procédé de soudage selon l'une des revendications 1 à 8, **caractérisé en ce qu'**on opère sous un flux de protection comprenant un gaz actif.

10. Procédé de soudage selon la revendication 9, **caractérisé en ce que** le gaz actif de protection comprend de l'argon, et/ou de l'hélium et au moins un composé choisi parmi $CO_2$, $H_2$, $O_2$ et leurs mélanges.

Claims

1. Pulsed-current arc welding process, with consumable wire and arc-spraying type transfer with a single drop of molten metal transferred from the wire to the weld bead, at each current pulse, **characterized in that** each electric current pulse has a rising di/dt and/or a falling di/dt of between 50 A/ms and 1000 A/ms, the pulse not being of triangular shape.

2. Arc welding process according to Claim 1, **characterized in that** each pulse has a peak time of non-zero duration.

3. Arc welding process according to either of Claims 1 and 2, **characterized in that** the said rising di/dt and/or the said falling di/dt are between 100 A/ms and 600 A/ms.

4. Arc welding process according to one of Claims 1 to 3, **characterized in that** the said arc welding process is a MAG process.

5. Arc welding process according to Claim 4, **characterized in that** the frequency of the pulses is controlled so as to obtain drops of molten metal whose diameter, at the moment of their release, is between 1 and 1.4 times the diameter of the said consumable wire.

6. Arc welding process according to Claim 5, **characterized in that** the frequency of the pulses is controlled so as to obtain drops of molten metal whose diameter, at the moment of their release, is approximately 1.2 times the diameter of the said consumable wire.

7. Welding process according to one of Claims 1 to 6, **characterized in that** the pulses are trapezoidal.

8. Welding process according to one of Claims 1 to 6, **characterized in that** the pulses are composed of a combination of several identical, similar or different features chosen from trapezoidal, sinusoidal, triangular, rectangular or square features.

9. Welding process according to one of Claims 1 to 8, **characterized in that** it is carried out under a shielding mass stream comprising an active gas.

10. Welding process according to Claim 9, **characterized in that** the active shielding gas comprises argon and/or helium and at least one compound chosen from $CO_2$, $H_2$, $O_2$ and mixtures thereof.

Patentansprüche

1. Verfahren zum Lichtbogenschweißen mit gepulstem Strom mit einem Schmelzdraht und einem bogensprühartigen Übertrag mit einem einzigen Tropfen geschmolzenen Metalls, der bei jedem Strompuls vom Draht auf die Schweißnaht übertragen wird, **dadurch gekennzeichnet, daß** jeder elektrische Strompuls Anstieg- und/oder Abfallteilheiten aufweist, die zwischen 50A/ms und 1000A/ms liegen, wobei die Impuls nicht dreiecksförmig sind.

2. Verfahren zum Lichtbogenschweißen nach Anspruch 1, **dadurch gekennzeichnet, daß** jeder Puls eine Hochpegeldauer von nichtverschwindender Dauer aufweist.

3. Verfahren zum Lichtbogenschweißen nach einem der Ansprüche 1 oder 2, **dadurch gekennzeichnet, daß** die Anstieg- und/oder Abfallsteilheiten zwischen 100A/ms und 600A/ms liegen

4. Verfahren zum Lichtbogenschweißen nach einem der Ansprüche 1 bis 3, **dadurch gekennzeichnet, daß** das Verfahren zum Lichtbogenschweißen ein MAG-Verfahren ist.

5. Verfahren zum Lichtbogenschweißen nach Anspruch 4, **dadurch gekennzeichnet, daß** die Pulsfrequenz so geregelt wird, daß Tropfen geschmolzenen Metalls erhalten werden, deren Durchmesser im Moment ihrer Freigabe zwischen dem 1 und 1,4-fachen des Durchmessers des Schmelzdrahtes liegt.

6. Verfahren zum Lichtbogenschweißen nach Anspruch 5, **dadurch gekennzeichnet, daß** die Pulsfrequenz so geregelt wird, daß Tropfen geschmolzenen Metalls erhalten werden, deren Durchmesser im Moment ihrer Freigabe etwa das 1,2-fache des Durchmessers des Schmelzdrahtes beträgt.

7. Verfahren zum Lichtbogenschweißen nach einem der Ansprüche 1 bis 6, **dadurch gekennzeichnet, daß** die Pulse trapezförmig sind.

8. Verfahren zum Lichtbogenschweißen nach einem der Ansprüche 1 bis 6, **dadurch gekennzeichnet, daß** die Impulse aus einer Kombination mehrerer identischer, ähnlicher oder unterschiedlicher Muster zusammengesetzt sind, für die trapezförmige, sinusförmige, dreieckige, rechteckige oder quadratische Muster gewählt werden.

9. Verfahren zum Lichtbogenschweißen nach einem der Ansprüche 1 bis 8, **dadurch gekennzeichnet, daß** unter einer Schutzströmung gearbeitet wird, die ein aktives Gas umfaßt.

**10.** Verfahren zum Lichtbogenschweißen nach Anspruch 9, **dadurch gekennzeichnet, daß** das aktive Schutzgas Argon und/oder Helium und zumindest eine Verbindung umfaßt, für die $CO_2$, $H_2$, $O_2$ oder ihre Gemische gewählt werden.

*FIG.1*

*FIG.2*

*FIG.3*

*FIG.4*

FIG. 5

FIG. 6

Th

FIG. 7

Th

FIG. 8

Th

Tgm

Tgd

FIG. 9

Th

FIG. 10

Tb